# EUROPEAN PATENT SPECIFICATION

(11) **EP 3 533 324 B1**
(45) Date of publication and mention of the grant of the patent: **29.12.2021**
(21) Application number: 19000104.0
(22) Date of filing: 27.02.2019
(51) Int. Cl.: A01K 27/00

(54) **ANIMAL HARNESS COMPRISING AN ELASTIC SHOULDER STRAP SYSTEM**
TIERGESCHIRR UMFASSEND EIN ELASTISCHES SCHULTERRIEMENSYSTEM
HARNAIS POUR ANIMAL COMPRENANT UN SYSTÈME DE SANGLE D'ÉPAULE ÉLASTIQUE

(30) Priority: 01.03.2018 HU 1800073
(43) Date of publication of application: 04.09.2019
(73) Proprietor: Julius-K9 Zrt., 2310 Szigetszentmiklós (HU)
(72) Inventor: Sebö, Gyula, 2310 Szigetszentmiklós (HU)

(56) References cited:
- US-A1- 2016 332 595
- US-B2- 9 301 506

## Description

The patent application relates to an animal harness comprising an elastic shoulder strap system for pulling, walking, lunging animals, which elastic shoulder strap system is fixed to the back part of the animal harness, to the lining thereof, which lining is lined at least partially by a neck lining, and two shoulder straps are connected to a connecting element located on the axis line, forming a "V" shape, in a manner that allows them to turn within a given angle range, sliding on the neck lining together, simultaneously and independently of each other, separately, along a curve determined by the curve path of the connecting element.

There is at least one connecting portion of elastic design on the side of the connecting element opposite to the shoulder straps, and the connecting portion elastically links the connecting element together with the lining of the back strap, whereby the connecting element and the shoulder straps are movable in the direction of both the vertical axis line and the axis line to the extent of the stretching of the connecting portion of elastic design, and the shoulder straps are capable of elastic displacement to different extents within an alpha angle range simultaneously, depending on the extent and direction of the stretching of the connecting portion as a function of the direction and extent of the pulling or tugging forces acting through the leash connector, and the forces generated by the movement of the shoulders of the animal.

The elastic shoulder strap system is disclosed for dog harnesses developed from the harnesses designed for draught animals used for pulling loads.

Documents US9301506B2 and US2016/0332595A1 belong to the relevant prior art and disclose harnesses for dogs.

Before examining the different types of dog harnesses, we should mention the harness versions commonly used in the draught animal and horse culture, as practically all types of dog harnesses have originated from the draught harnesses developed for pulling carts.

The early neck and girth harnesses developed before Christ put too much load on the neck of the animal. In order to eliminate this problem, they were replaced by breast strap harnesses, which by all probability appeared in the Roman culture and in the Carpathian Basin through the Hun expansion, and became the dominant harness type of the steppe peoples and the Hungarians. The breast strap harnesses also spread to the Western culture as comfortable wear for pulling chariots and elegant coaches. A well-known example of the breast strap harnesses in art history is the statue of horses on the top of the Brandenburg Gate in Berlin.

The third type, the so called collar and hames, or full collar harnesses, the predecessors of the current Y- or Norwegian dog harness, were used commonly for pulling loads, heavier weights on more difficult terrains in Europe, with the exception of the Carpathian Basin (and through the colonists in America as well). A properly designed full collar harness allowed the horse to use its full weight, thus it proved more efficient for pulling heavy loads than the breast strap harness.

In ancient times dog harnesses were developed generally for dogs working in special deployment areas, where strong-bodied dogs took an active part in combat. As a result of the development of the war industry, dogs were transferred to guard duty. In the 20th century, primarily World War I opened a new direction of development for service dogs as rescue and messenger dogs, then after World War I the first guide dog harnesses appeared. During the American Gold Rush dogs were also used for pulling sleds. These uses all required the continuous development of dog equipment and harnesses.

Dog harnesses, similarly to horse harnesses, can be divided into two main groups according to the design of their chest strap and/or neck part. There are so called "Collar and hames", that is full collar harnesses, which have been later developed into Y-harnesses for dogs, and "Breast strap harnesses", that is chest harnesses.

Both types of harnesses include versions equipped with a saddle part on the back, or solutions made of only straps, all of which are suitable for walking a dog on a leash. Irrespective of the chest strap design and the size, all types of harnesses are available in versions with a saddle part. The saddle part rests on the back of the dog as a blanket, back part and lining, and may hang down on its sides. It allows the attachment of technical equipment (torch, bag, camera, label, etc.) without coming into contact with the body of the dog or interfering with its movement.

In the case of chest harnesses, load is optimally distributed by the chest strap connecting the two shoulder joints horizontally at the height of the chest bone, running in the direction of the back part or the sides of the dog.

The chest straps of chest harnesses are preferably wide, with a lining, and they optimally form a rigid hoop, allowing the shoulders to move freely. A great advantage of the chest strap design of chest harnesses is that, in the case of optimal size selection and adjustment, the neck line, including the neck blood vessels and lymphatic vessels, is left free. When the front legs and shoulders move forward, the rigid chest strap made usually of straps moves towards the neck of the dog, therefore an elastic design is less justified for chest harnesses.

In the case of full collar harnesses, which are called Y-harnesses after the "Y" shape formed by the "V"-shaped shoulder straps connected to each other and the chest pad connected to them, there is a strong risk that the neck of the dog, the blood and lymphatic vessels, etc., are subjected to unpreferable load on both sides even during everyday leading on a leash.

The best-known representatives of Y-harnesses are, for example, the sled harnesses of special design, perfected for pulling loads, which have developed into their current form through centuries, and have now also been designed for street use. The shoulder straps of collar and hames harnesses are located between the neck and the shoulder joints, steeply curved upwards. The strap surrounding the neck allows the animal to exert its pulling force optimally on the whole area of the chest and spine. It is not a coincidence, that this type of harness is used for pulling sleds. All Y-harnesses have a padding connected to the neck strap or shoulder straps, extending under the belly in parallel to the spine, while for chest harnesses a chest pad is available in a form that is attachable subsequently to the chest strap.

In the case of the Y-harnesses, while leading on a leash, doing weight pulling sports, etc., the load is distributed on the area between the shoulders and the neck line of the dog, on the two shoulder straps, and the lines of force proceed along the spine line of the dog.

Unlike horses, dogs are walked on a short leash, where the leash forms an angle of 35-75 degrees with the horizontal plane or the spine line of the dog, as a function of the height of the dog and the distance between the hand holding the leash and the dog. The latter obviously depends on the length of the leash as well. The angle between the leash and the spine line of the dog, and the chest and neck build of the dog determine together the optimal direction of the shoulder straps for arriving at the chest pad connector from the connecting element on the back part.

In the case of the Y-harnesses, the movement of the shoulder joints greatly influences the tension of the shoulder straps. The leash may tighten at each step, putting a load on both the neck of the dog and the arm, the shoulder, or even the hip joints of the person holding the leash. In the case of the Y-harness, the connecting element receiving the shoulder straps, fixed at the withers of the dog in a fix manner, rhythmically tightens at each step, laterally as well, even during everyday walks. The result is particularly noticeable during walking in the case of certain dog breeds, such as some Bull breeds and other broad-breasted, short-legged breeds, because their walk is wobbly. The chest pad in the continuation of the shoulder straps, under the belly, may swing laterally due to the tugging of the leash, in addition to its own weight, while the neck straps cause friction by tightening and loosening on the neck of the dog. The movement of the shoulders may lift the shoulder straps at each step as a function of the muscle structure of the dog, even when the dog walks without a leash. The movement of the shoulders further enhances the wobbling of the harness and increases the inertia, swinging of the chest pad under the belly. It is justified to include elastic elements on the area of the whole back part, especially if we want the animal to run or walk on a lunge.

In the case of the "Y" harness design, when the dog is lead on a leash, the steps, the movement of the shoulders of the dog and the periodic movement of the person holding the leash result in micro-tuggings, which put a load on the joints and can make the healing of injuries difficult. These effects are collectively called HAVS, that is: *Hand-Arm Vibration Syndrome.*

The task of the dog harness and the leash is to implement a connection between two bodies of different weights, speeds and speed directions with the lowest possible maximum force. The ratio of the two bodies, the human and the dog, covers a wide range, therefore the elastic element of the dog harness should be implemented in different sizes, with different mechanical properties. In the case of a constantly tight leash a "static" pulling force acts, which is favourable in terms of peak force.

However, during the movement of the human and the dog, as a result of the steps and the swinging of the arm, a continuous periodic-dynamic excitation occurs, which load causes a so called tugging force. In the case of a loose leash, tugging occurs at the moment of the straightening of the leash as a result of a jump in speed. In theory, in the case of a perfectly rigid structure, the "force acting" upon tugging "as a result of infinitely high acceleration" is "infinitely high." In reality, however, due to the elasticity of the connection points of the leash, the harness and the leash itself, the duration of tugging increases, which can be significant in spite of a reduction in the peak force, depending on the speed and weight conditions, and the elasticity of the connection. In addition, the tugging force acts unexpectedly, shockingly, catching both the human and the dog unprepared. The high force and shock acting upon tugging is reduced by incorporating elastic elements into the dog harness. Tugging occurs when there is a big difference between the acceleration of the two bodies. The design of the elastic elements has to take into consideration the load, stress acting on the material, and on the participants. Both humans and dogs need time for their muscles to adapt to the load changes safely.

Diseases associated with vibration-tugging load on the human hand and arm, such as the Raynaud's Syndrome, the Carpal Tunnel Syndrome, and diseases involving the inflammation of the tendons have provided a basis for examining how similar loads act on the body of the dog and the human holding the leash while leading the dog on a leash, and how these loads could be reduced by a dog harness equipped with an elastic system of sized stretching.

In the prior art a solution close to this is disclosed by a Hungarian invention entitled "Chest harness with an elastic chest strap" (US 9,820,471). This prior art relates to a quick release chest harness with an elastic chest strap, developed for four-legged mammals, comprising a back strap, a leash ring fixed on it for attaching a leash, a belly strap equipped with a quick release buckle, and a chest strap running between the chest bone and the throat area. The chest strap is attached at the connection of the back strap and the belly strap on both sides of the harness, and furthermore there is a connecting element between the chest strap and the back strap, connecting them at an angle.

The aim of this harness is to improve the harness suitable for securing four-legged mammals, primarily dogs e.g. in a car or during police work, within that to develop an elastic chest strap over a given section, protecting the joints of the dog and the human.

A disadvantage of this prior art harness is that it does not allow the displacement of the elastic element in any direction other than that of the chest strap. The chest strap stretches in a given direction and the fastener/adjuster ring, as a connecting element, is not moving, it is firmly fixed. The harness allows the development of an elastic portion on the two sides of the chest strap of the chest harness, which can stretch only in the direction of the chest strap. The stretching limiting element and the elastic element cannot move in the lateral direction. The elastic element cannot move compared to the spine line of the dog either, thereby the line of the chest strap is not adjustable, it does not adapt itself to the anatomical features of the dog.

Only the chest strap, and on the other side the continuation thereof, is fastened to the fastener/adjuster ring, that is the connecting element. A connecting portion or other neck or chest straps cannot be fastened to the fastener/adjuster ring according to the invention.

The curve path of the fastener/adjuster ring does not allow the straps fastened to it to move compared to the spine line, forming a varying angle.

In the prior art another solution close to this is disclosed by Zimmerman in patent No. US20070044735A1 relating to an Y-dog harness with two shoulder straps, a back part and a connecting portion along the spine line.

In the case of the dog harness of Zimmerman the aim of the development was to provide a comfortable and form fitting harness to the dog, that is why the elastic portions were included.

The dog harness of Zimmerman was developed exclusively with the aim of providing a form fitting, comfortable harness to the dog.

The stretching is obviously associated with the wearing-out of the components, as the elastic components are not coupled with an element limiting their stretching. Therefore the elastic portions operate by overloading, breaking the elastic threads in them.

The harness of Zimmerman does not provide obvious guidance on how to develop the elastic design of the dog harness with stretching limiting elements on the back part. It does not teach the elastic displacement of specifically the shoulder straps within an alpha and/or beta angle range.

Although Zimmerman may have recognized the periodic loosening and tightening of the shoulder straps of Y-harnesses, the patent of Zimmerman relates only to the general use of elastic straps and the implementation of form fitting straps for added comfort. It is not an aim in this case to provide an accurate and conscious design for the incorporated elastic portion in order to ensure that the hand holding the leash and the neck of the dog are not subjected to undesirable forces during walks.

This prior art also fails to mention that in the case of "Y" harness designs the two shoulder straps and the chest pad may move laterally at each step, which can be actually compensated by an elastic portion incorporated possibly into the back part or elsewhere. The connecting element located on the back, on the spine line, is not considered for development as a centre for elastic design. The alpha angle formed by the shoulder straps and the spine line of the dog, the determination of the range of that angle, the free displacement of the shoulder straps within that angle range, are not the subjects of development.

In the prior art the invention closest to this is disclosed by a Hungarian patent application of file No. P1700113 relating to a dog harness with a leash-holding element with controlled displacement. According to this prior art, a leash-holding element with controlled displacement is formed on the dog harness, which comprises a back part, a back strap connected thereto and a leash-holding end element included in a loop holding the leash-holding end element, furthermore a chest part and/or neck strap, and a belly strap connected to the back part, furthermore an elastic portion, and furthermore the stretching of the dog harness as a function of the forces acting when leading the dog on a leash is controlled by at least one loop portion limiting the stretching of the elastic portion of the dog harness.

This harness includes a loop portion limiting the stretching of the elastic portion, forming a protrusion on the back part, an open loop traversable in the direction perpendicular to axis line, one end of which is covered by a strip limiting cover element perpendicular to it and the axis line, pressing it to the back part, and the loop portion limiting the stretching of the elastic portion intrudes between the strip limiting cover element, the underlay and the strip limiting cover element fixing zones, as a result of which the protrusion thereof disappears.

This prior art discloses a solution working together, built together with the leash-holding end element, the leash connector, allowing the displacement thereof, and controlling the displacement of the leash connector in the direction of the axis line. The leash connector, and the elastic portion and the loop portion limiting the stretching of the elastic portion move together in a direction parallel to the axis line.

A disadvantage of this prior art is that it does not allow the shoulder straps to turn independently of each other within an alpha angle range, and does not allow the elastic displacement of the shoulder straps away from the direction of the axis line within an alpha and beta angle range.

Displacement in a direction other than that of the axis line is prevented by the strip limiting cover element, the strip limiting cover element fixing zones and the underlay on both sides of the axis line.

A connecting element is not incorporated, thereby only the leash connector is affected by the elastic displacement, and only in a direction parallel to the spine line, opposite to the shoulder straps.

Elastic displacement is possible only in the direction of the leash connector, in the direction opposite to the shoulder straps. The elastic portion is not adapted to the movement of the shoulders by displacements perpendicular to the axis line. The elastic design is only indirectly affected by the movement of the shoulders. Furthermore, the stretching limiting loop portion protrudes from the back part perpendicularly to the axis line, the spine line, posing a risk of getting caught up. Furthermore, its implementation is conditional on the strip limiting cover element.

In response to the slightest force, the stretching limiting loop portion intrudes under the strip limiting cover element on the axis line, causing friction, thus it is subjected to constant friction stress.

The aim of this invention is to eliminate the above shortcomings, therefore it discloses the development of specifically the shoulder and back parts of the Y-harness, an elastic shoulder strap system, the basic element of which is the shoulder strap running to the back part on both sides of the neck of the animal. The two shoulder-neck straps replace the one horizontal chest strap disclosed for chest harnesses, have a completely different line from that, because due to its angle the chest strap cannot be connected in a "V" shape in a single connecting element.

In the prior art the use of elastic elements in dog harnesses is not developed into a design where the two shoulder straps end in a connecting element, and at least one connecting portion ends in the connecting element on the side opposite to the shoulder straps, forming a "Y" or an "X" shape with each other in the connecting element. In the prior art the elastic elements allow elastic displacement in a given direction, in the direction of the axis line or the chest strap of the chest harness, and the limiting elements are not moving in a direction other than the direction given by the axis line or the line of the elastic elements. In the prior art the displacement of shoulder straps in a connecting element holding them within an alpha and a beta angle range is not developed.

An aim of this invention is to eliminate the above disadvantages, and to implement the elastic displacement of the shoulder straps over a wide angle range. It is expedient to provide a design in which the shoulder straps adapt themselves to the build of the dog, by turning freely in a connecting element within a reasonably expected angle range, in order to rest on the neck line of the dog. Another aim is to implement the elastic displacement of both shoulder straps within a beta angle range, even without a limiting element.

Another aim is to provide an elastic design for the at least one connecting portion formed on the back part, with a limiting element, which allows the displacement of the shoulder straps and/or the connecting element in a direction other than that of the axis line.

Another aim is to limit the displacement of the elastically designed connecting portion in a direction other than that of the axis line by fixing zones on both sides of the axis line, which can be given sections of the edging element bordering the lining. Another aim is to provide a connecting element with a diameter allowing circular movement, end play, and fixing zones allowing displacement perpendicularly to the axis line.

Another aim is to form a "Y" shape, or in the case of two connecting portions an "X" shape from the shoulder straps and the connecting portion or portions on the side of the connecting element opposite to the shoulder straps, with the connecting element located in the centre.

Another aim is to implement a limiting element running along the axis line, passing through the connecting element, which allows the connecting element to be displaced perpendicularly to the axis line or at a lower angle.

Another aim is to ensure that the limiting element rests flat on the back part both in the rest state and in operation.

Another aim is to ensure that the limiting element allows a displacement of at least 1 cm to the elastically designed connecting portion, even within the whole beta angle range. Another aim is to ensure that the elastic shoulder strap system is covered at least partially by a cover portion, which optimally prevents the protrusion of the connecting element and the limiting element from the back part to an extent exceeding the thickness of their material, thereby preventing them from getting caught up on landmarks.

Another aim is to thread each shoulder strap through a turning limiter, and to have the turning of the shoulder straps limited by the turning limiter compared to the axis line.

Another aim is to make the lining abrasion-resistant in order to ensure that the surface thereof is not worn-out prematurely by the connecting element and the shoulder straps sliding on the lining.

Another aim is to have the limiting element cover the connecting portion implemented as an elastic element at least partially from the direction of the cover portion.

Another aim is to ensure that the connecting portion reaches its maximum stretching at a load of 5 kg. Yet another aim is to have the limiting element fixed to the lining in at least two points. The displacement of the connecting element is limited on the side towards the neck lining by a connecting element fixing point, the connecting element should bump into it when reaching its maximum displacement in the direction of the spine line. In the event of stretching in the direction of the axis line, a hold-down point formed by the limiting element should move together with the connecting element. The invention is defined by the features of claim 1, and relates to an animal harness comprising an elastic shoulder strap system for pulling, walking, lunging animals, which elastic shoulder strap system is fixed to the back part of the animal harness, to the lining thereof, which lining is lined at least partially by a neck lining. The elastic shoulder strap system comprises two shoulder straps connected in a "V" shape in a connecting element located on the axis line of the back part, forming a beta angle with each other, each forming an alpha angle with the axis line separately, and there is at least one connecting portion in the connecting element, on the side thereof opposite to the shoulder straps, which is fixed together with the lining in at least one fixing point on the axis line.

The elastic shoulder strap system is fixed to the back part of the animal harness, the ends of the shoulder straps opposite to the connecting element extend to the chest pad of the animal harness, and are connected thereto, furthermore, the animal harness has a belly strap having at least one buckle portion, running under the belly of the dog and extending in the direction of the back part, and at least one leash connector on the back part.

The essence of the invention is that the shoulder straps, sliding on the neck lining, turn on the connecting element, on a curve determined by the curve path thereof, together, simultaneously and independently of each other, separately to at least 40% of an alpha angle range.

The connecting portion has an elastic design, and the connecting portion elastically links the connecting element together with the lining of the back strap, whereby the connecting element and the shoulder straps are movable in the direction of both the vertical axis line and the axis line as a function of the stretching of the connecting portion, and the shoulder straps are capable of elastic displacement to different extents within an alpha angle range simultaneously, depending on the extent and direction of the stretching of the connecting portion as a function of the direction and extent of the pulling or tugging forces acting through the leash connector, and the forces generated by the movement of the shoulders of the animal.

The connecting portion is at least partially covered on the side opposite to the lining by a limiting element passing through the connecting element. The limiting element limits the stretching of the connecting portion.

The limiting element is fixed together with the lining in a connecting element fixing point on the side opposite to the fixing point on the axis line, defined compared to the axis line.

There is a hold-down point between the fixing point on the axis line and the connecting element fixing point, which hold-down point moves together with the connecting element along the axis line under load.

At the hold-down point separating the fixing point on the axis line from the connecting element fixing point, the limiting element is designed to press the connecting element to the lining.

The limiting element is traversable perpendicularly to the axis line at least between the connecting element fixing point and the fixing point on the axis line.

The limiting element rests flat on the connecting portion, and beyond the connecting element on the neck lining both in the out of use state and in operation.

The connecting portion bumps into the connecting element fixing point of the limiting element under maximum load acting in the direction of the axis line.

The hold-down point moves together with the connecting element along the axis line.

The distance between the connecting element and the connecting element fixing point in the rest/out of use state, when no pulling force acts on the leash, is minimum 10 mm.

In a preferred embodiment the elastic shoulder strap system is covered at least partially by a cover portion on the side opposite to the lining, pressing the limiting element to the lining. The cover portion is fixed to the lining by fixing zones at least on the two sides of the connecting portion.

Openings formed in the cover portion at the shoulder straps are the turning limiters, and each shoulder strap is threaded through a turning limiter on the area of the back part lined/covered by the neck lining.

If the back part of the animal harness is not equipped with a cover portion, the turning limiters are preferably straps fixed together with the edging element and the lining.

The turning limiters are designed to limit the turning of the shoulder straps to within an alpha angle range.

The connecting portion is at least as long as the largest outer diameter of the connecting element.

The connecting element has end play in the direction perpendicular to the axis line, which end play is defined by the difference between the inner diameter of the connecting element and the width of the limiting element. The shoulder straps and the connecting element move in the direction perpendicular to the axis line on both sides thereof to the extent of the end play, while the limiting element remains along its whole length in the direction of the axis line.

The end play allows a displacement of at least 5 mm to the connecting element in the direction of the vertical axis line on both sides of the axis line. In the event of a displacement exceeding the end play due to forces acting in a direction other than that of the axis line, the limiting element gets wrinkled at the hold-down point.

The limiting element, extending beyond the connecting element fixing point, ends in the fixing zone of the edging element on the side opposite to the fixing point on the axis line.

Preferably, there are fixing zones at a distance of at least 20 mm from the axis line on the two sides of the connecting portion on both sides of the axis line.

The fixing zones are at a distance of at most 200 mm from the axis line on the two sides of the connecting portion on both sides of the axis line.

The fixing zones fix together the edging element and the lining at least partially.

The minimum width of the lining in the direction perpendicular to the axis line, in the line of the connecting portion, is at least three times the width of the connecting portion in the direction perpendicular to the axis line. The minimum width of the lining in the direction perpendicular to the axis line, in the line of the connecting portion, is at least two times the width of the limiting element in the direction perpendicular to the axis line.

The length of the neck lining in the direction of the axis line is at least 10% of the length of the lining in the direction of the axis line.

In a preferred embodiment the elastic shoulder strap system has one connecting portion, then the connecting portion forms a "Y" shape with the shoulder straps, and the limiting element covers the connecting portion. In another embodiment the elastic shoulder strap system has two connecting portions fixed to the lining, forming a "V" shape in the connecting element.

The solution according to the invention is described in detail below with reference to the figures, without limiting it to the exemplary embodiments.

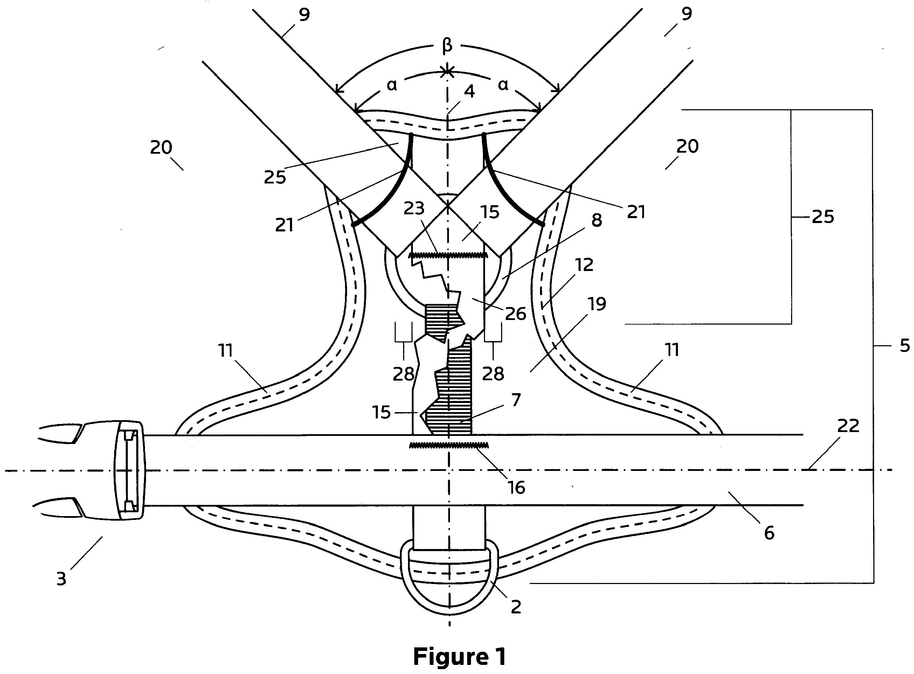

- Figure 1: shows a top view, in an outspread position, of the back part of the animal harness, showing in a local cross section the elastic connecting portion covered by the limiting element, furthermore the shoulder straps threaded through the turning limiters, and the alpha and beta angles in a preferred embodiment, as well as the connection of the shoulder straps and the connecting portion in the connecting element, and the connection of the connecting portion to the back strap;

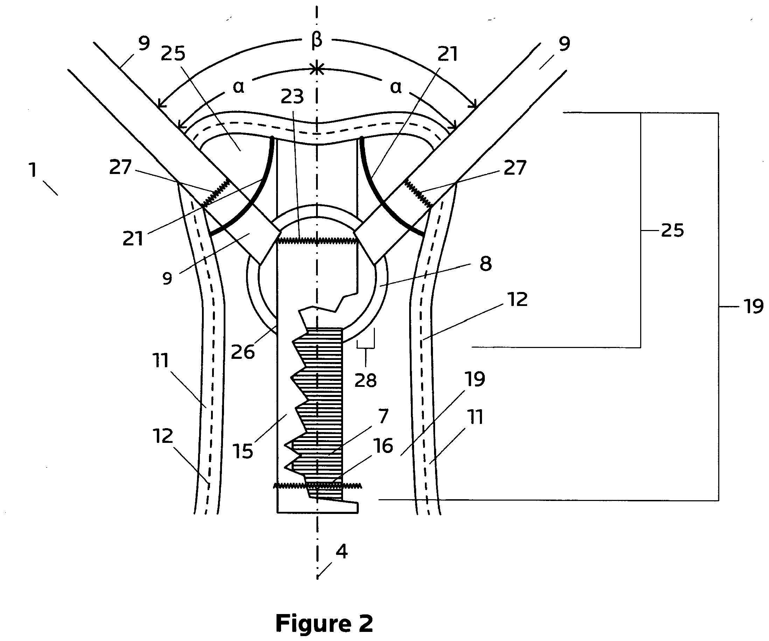

- Figure 2: shows a top view of the elastic shoulder strap system, the parts thereof, in an outspread position, in a preferred embodiment;

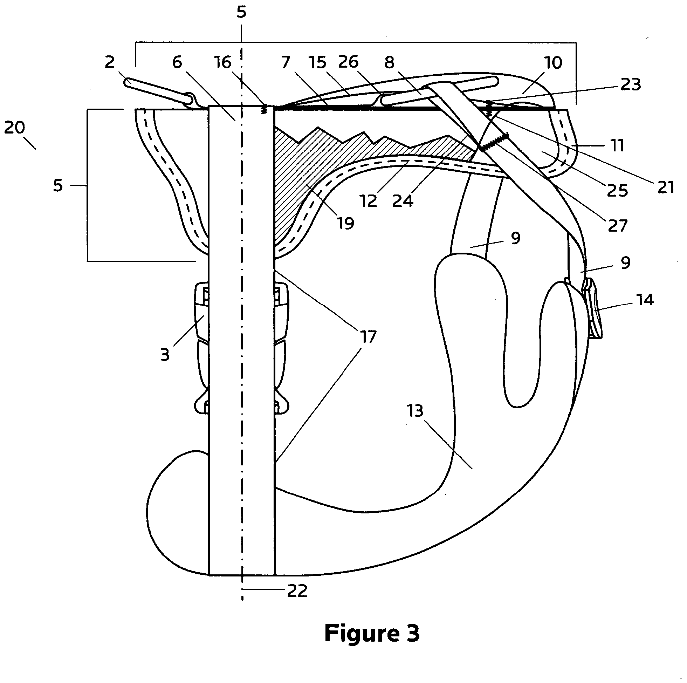

- Figure 3: shows a side view of the parts of the animal harness of Figure 1, covered partially by a cover portion, the connection of the shoulder straps under the belly, and the cover portion covering the lining at least partially, showing in a local cross section the main parts of the elastic shoulder strap system.

Figure 1 shows a top view, in an outspread position, while Figure 3 shows a side view of the back part 5 of the animal harness 20, the shoulder straps 9, the connecting portion 7 of elastic design, and the shoulder straps 9 threaded through the turning limiters 21, in a preferred embodiment.

Figure 1 shows the two shoulder straps 9 forming a beta angle (β) with each other, forming an alpha angle (α) with the axis line 4, and connected in a "V" shape to each other. Both Figure 1 and Figure 3 show the connection of the shoulder straps 9 to the connecting element 8.

As shown in Figure 1, two shoulder straps 9 and a connecting portion 7 made of an elastic material are connected to a circular connecting element 8.

As shown in the local cross section, the limiting element 15 is at least 10% wider than the connecting portion 7.

Figure 1 and Figure 3 show the whole back part 5 and the back strap 6 located thereon, ending in a buckle portion 3.

Figure 1 shows that the elastic shoulder strap system 1 is formed on the back part 5, along the axis line 4, in such a way that the elastic shoulder strap system 1 has a connecting portion 7 forming an angle of at least 15 degrees with the back strap 6 and/or the vertical axis line 22, ending in a connecting element 8, and two shoulder straps 9 forming a "V" shape with each other. The connecting portion 7 forms a "Y" shape with the shoulder straps 9 in the connecting element 8, and runs in parallel to, along the axis line 4.

The connecting portion 7 is made of a woven rubber and textile material, and in this embodiment it is connected to the back strap 6. At least one leash connector 2 is fixed on the back part 5, in a manner touching the axis line 4, which is preferably a metal, woven textile or plastic ring.

In Figures 1 and 3 the back part 5 is equipped with a lining 19, which separates the back of the dog from the connecting portion 7 and the connecting element 8. The lining 19 has a neck lining 25 on the side of the connecting element 8 opposite to the connecting portion 7, extending beyond the connecting element 8, which can be formed in the continuation of the lining 19, or from a separate piece fixed to it. The shoulder straps 9 pass over the neck lining 25 and turn within a beta angle range.

Turning limiters 21 are formed in a manner touching the neck lining 25, limiting the turning of the shoulder straps 9 to within a beta angle range.

The turning limiters 21 are preferably straps fixed together with the edging element 11 and the lining 19, which can withstand the friction caused by the shoulder straps 9 and allow their displacement between the two ends of the turning limiters 21. The turning limiters 21 can be formed by given sections of the cover portion 10 shown in Figure 3, covering at least 60% of the back part 5, but they can also be made of straps as shown in Figure 1.

The lining 19 and the neck lining 25 are bordered by an edging element 11, which has a fixing zone 12. The fixing zone 12 fixes the lining 19 and the neck lining 25 to the edge of the back part 5. The shoulder straps 9 slide on the section of the edging element 11 bordering the neck lining 25. The neck lining 25 is narrower than the width of the lining 19 in the line of the vertical axis line 22. The neck lining 25 extends in the direction of the axis line 4 from the side of the connecting element 8 towards the connecting portion 7 to the side of the lining 19 opposite to the connecting portion 7, and is preferably bordered by the edging element 11.

The elastic shoulder strap system 1 has two shoulder straps 9 ending in the same connecting element 8 in a "V" shape, forming a varying beta angle with each other, and each forming a varying alpha angle with the axis line 4 separately, sliding on the neck lining 25, turning on the connecting element 8 together, simultaneously and independently of each other, separately, along a curve determined by the curve path of the connecting element 8, on both sides of the axis line 4.

Each shoulder strap 9 turns to an extent within an alpha angle range of at least 15-25 degrees compared to the axis line 4.

The shoulder straps 9 are threaded through the connecting element, folded back on themselves and fixed in such a way that they, or their extended longitudinal axes form a beta angle with each other, and each forms an alpha angle with the axis line 4 separately.

A limiting element 15 is fixed to the back strap 6 by a fixing point on the axis line 16, preferably by sewing, and there is a leash connector 2 in the continuation thereof in the direction of the axis line.

Most preferably, the elastic displacement of the elastic shoulder strap system 1 in the direction of the axis line 4 and the vertical axis line 22 is implemented by the elastic design of the connecting portion 7. The connecting portion 7 of elastic design allows the elastic displacement of the connecting element 8 in the direction of the vertical axis line 22 and the axis line 4.

The maximum stretching of the connecting portion 7 is controlled by the length of a limiting element 15 passing through the connecting element 8. The maximum stretching of the connecting portion 7 in the direction of the axis line 4 is limited by a connecting element fixing point 23 and the connecting portion 7 bumps into it. The connecting element fixing point 23 is sewing across the limiting element 15 in the direction perpendicular to the axis line 4 or a rivet, fixing the lining 19 as well. The connecting portion 7 is fixed together with the lining 19 in the fixing point on the axis line 16. The shoulder straps 9 are not directly fixed together with the lining 19, thereby they are capable of turning.

The length of the limiting element 15 traversable in the direction perpendicular to the axis line 4 is given by the distance between the fixing point on the axis line 16, fixing the connecting portion 7 and the limiting element 15 to the lining 19, and the connecting element fixing point 23, formed on the neck lining 25, fixing together the limiting element 15 and the lining 19. The fixing points are most preferably sewings.

The length of the connecting portion 7 is given by the distance between the connecting element 8 and the fixing point on the axis line 16.

The connecting portion 7 is longer, or at least as long as the largest outer diameter of the connecting element 8. The length of the connecting portion 7 is at least 15 mm. . The width of the connecting portion 7 is at least 6 mm, and most preferably it is made of a strap, which contains rubber, elastomer or silicone. The limiting element 15 is a strap of a width of at least 10 mm, which also contains elastic fibres. There are fixing zones 12 on the two sides of the limiting element 15 on both sides of the axis line 4, which can be the sewing fixing the edging element 11, or rivets or sewings located closer to the axis line 4. The fixing zones 12 allow the displacement of the limiting element 15 in the direction of the vertical axis line 22 on both sides of the axis line 4 by at least 1 cm. There are fixing zones 12 on the two sides of the connecting element 8 on both sides of the axis line 4, controlling the displacement of the connecting element 8 in the direction of the vertical axis line 22.

The connecting element 8 moves in the direction of the vertical axis line 22 to the extent of the looseness of the limiting element 15, determined by the connecting element fixing point 23 and the fixing point on the axis line 16, following the rhythm of the steps and the movement of the shoulders of the animal, the tightening of the leash connected to the leash connector 2.

The difference between the inner diameter of the connecting element 8 and the width of the limiting element 15 gives the end play 28 distance of the connecting element 8 in the direction of the vertical axis line 22, available without the stretching of the connecting portion 7. When the connecting element 8 moves within the end play 28 distance, the limiting element 15 does not move in the direction of the vertical axis line 22. The end play 28 of the connecting element 8 is at least 5 mm on each side of the axis line 4.

Figure 2 shows a top view of the elastic shoulder strap system 1, the parts thereof, in an outspread position, showing that the connecting portion 7 and the connecting element 8 are lined by the lining 19 and the neck lining 25 of the lining 19. In this embodiment there is one connecting portion 7 on the axis line 4, fixed together with the lining 19 in the fixing point on the axis line 16. The fixing point on the axis line 16 is preferably sewing or a rivet. The connecting portion 7 is an elastic strap of a width of at least 6 mm or a cord of a diameter of at least 3 mm, containing caoutchouc or silicone. The connecting portion 7 is threaded through the connecting element 8, and folded back on itself in the direction of and fixed in the fixing point on the axis line 16. The connecting element 8 is a curved metal or plastic ring, with the connecting portion 7 looped around the side thereof towards the fixing point on the axis line 16, and with the shoulder straps 9 connected to the opposite side thereof, forming an alpha angle with the axis line 4, a beta angle with each other, and connected in a "V" shape to each other. The shoulder straps 9 are threaded through the connecting element 8, and folded back on themselves and fixed by shoulder strap sewings 27. The connecting portion 7 is narrower than the shoulder straps 9. In this embodiment the connecting portion 7 is fixed together with a wider limiting element 15 in the fixing point on the axis line 16, which rests flat on the lining 19 and comes into contact with the connecting element 8 at a hold-down point 26. The limiting element 15 protrudes from the lining 19, as shown in Figure 3, to the extent of the thickness of the material of the connecting element 8 and the connecting portion 7. The hold-down point 26 formed by the limiting element 15 separates the connecting element fixing point 23 and the fixing point on the axis line 16 from each other. The largest width of the connecting element 8 in the direction perpendicular to the axis line 4 is at least 30% more than the width of the limiting element 15 in the same direction. The difference between the inner curve of the connecting element 8 and the width of the limiting element 15 gives the end play 28 width, over which the connecting element 8 moves, pulling with itself the shoulder straps 9. The lining 19 is bordered by the edging element 11 fixed by the fixing zone 12.

Figure 3 shows an animal harness 20 on which the back part 5 between the back strap 6 and the edging element 11 closing the neck lining 25 is covered by a cover portion 10, the cut openings of which are the turning limiters 21, which limit the turning of the shoulder straps 9. The turning limiters 21 are fixed in at least two points in the edging element 11 by the fixing zone 12.

Figure 3 shows in a local cross section the connecting portion 7 formed on the back part 5 of the animal harness 20 covered partially by a cover portion 10, the limiting element 15 covering it, which partially comes into contact with the connecting element 8 at the hold-down point 26, extending beyond the connecting element 8 in the direction of the neck lining 25 and fixed to the lining 19 in the connecting element fixing point 23, then fixed in the edging element 11 by the fixing zone 12. The limiting element 15 and the connecting portion 7 have a fixing point on the axis line 16 on the back strap 6. The shoulder strap 9 has a shoulder strap sewing 27, which shoulder strap sewing 27 fixes the foldback 24 of the shoulder strap 9.

The back part 5 of the animal harness 20 extends in the direction of a buckle portion 3. The back strap 6 ends in a chest pad 13 on the vertical axis line 22. The chest pad 13 extends upwards in the direction of the neck lining 25 and the shoulder straps 9 are connected to at least one chest pad connector 14. A leash connector 2 is fixed to the back strap 6 on the back part 5. The cover portion 10 is preferably a highly wear-resistant textile fabric.

The solution according to the invention, including the elastic shoulder strap system, discloses an ideal elastic design for animal harnesses with shoulder straps. The complete shoulder strap system, as a whole, is capable of elastic displacement in the rhythm and extent of the movement of the shoulders of the animal and the tightening of the leash connected to the leash connector due to the fact that one or more connecting portions connected to the connecting element have an elastic design. Turning and stretching within an alpha angle range ensures durable, dynamic stretching and relaxation during use even in the case of animals, dogs with an extreme build, and has a beneficial effect on the shoulder and arm joints of the human holding the leash.

### List of reference numbers

- 1.: elastic shoulder strap system
- 2.: leash connector
- 3.: buckle portion
- 4.: axis line
- 5.: back part
- 6.: back strap
- 7.: connecting portion
- 8.: connecting element
- 9.: shoulder strap
- 10.: cover portion
- 11.: edging element
- 12.: fixing zone
- 13.: chest pad
- 14.: chest pad connector
- 15.: limiting element
- 16.: fixing point on the axis line
- 17.: belly strap
- 19.: lining
- 20.: animal harness
- 21.: turning limiter
- 22.: vertical axis line
- 23.: connecting element fixing point
- 24.: foldback
- 25.: neck lining
- 26.: hold-down point
- 27.: shoulder strap sewing
- 28.: end play

## Claims

1. An animal harness comprising an elastic shoulder strap system for pulling, walking, lunging animals, which elastic shoulder strap system (1) is fixed to the back part (5) of the animal harness (20), to the lining (19) thereof lined at least partially by a neck lining (25), and comprises two shoulder straps (9), which shoulder straps (9) are connected in a "V" shape in a connecting element (8) located on the axis line (4) of the back part (5), forming a beta angle with each other, each forming an alpha angle with the axis line (4) separately, where the connecting element (8) is a curved ring and there is at least one connecting portion (7) looped around the connecting element (8), on the side thereof opposite to the shoulder straps (9), which is fixed together with the lining (19) in at least one fixing point on the axis line (16), furthermore, the ends of the shoulder straps (9) of the elastic shoulder strap system (1) opposite to the connecting element (8) extend to a chest pad (13) connected to the elastic shoulder strap system (1), furthermore, the animal harness (20) has a belly strap (17) having at least one buckle portion (3), running under the belly of the dog and extending in the direction of the back part (5), and at least one leash connector (2) on the back part (5),
wherein
the shoulder straps (9), sliding on the neck lining (25), turn on the connecting element (8), on a curve determined by the curve path thereof, together, simultaneously and independently of each other, separately, to at least 40% of an alpha angle range,
furthermore, the connecting portion (7) has an elastic design, and the connecting portion (7) elastically links the connecting element (8) together with the lining (19) of the back strap (5), whereby the connecting element (8) and the shoulder straps (9) are movable in the direction of both the axis line (4) and the vertical axis line (22) perpendicular to the axis line (4) to the extent of the stretching of the connecting portion (7), and the shoulder straps (9) are capable of elastic displacement to different extents within an alpha angle range simultaneously, depending on the extent and direction of the stretching of the connecting portion (7) as a function of the direction and extent of the pulling or tugging forces acting through the leash connector (2), and the forces generated by the movement of the shoulders of the animal, the connecting portion (7) is at least partially covered on the side opposite to the lining (19) by a limiting element (15) passing through the connecting element (8) and the connecting portion (7) is fixed together with the wider limiting element (15) in the fixing point on the axis line (16), furthermore the maximum stretching of the connecting portion (7) is controlled by the length of the limiting element (15), where the maximum stretching of the connecting portion (7) in the direction of the axis line (4) is limited by a connecting element fixing point (23) and under maximum load acting the connecting portion (7) bumps into it, furthermore the connecting element fixing point (23) on the side of the limiting element (15) opposite to the fixing point on the axis line (16), defined compared to the axis line (4), is sewn across the limiting element (15) in the direction perpendicular to the axis line (4) or rivetted, fixing it to the lining (19).

2. The animal harness according to claim 1, **characterized in that** there is a hold-down point (26) between the fixing point on the axis line (16) and the connecting element fixing point (23).

3. The animal harness according to claim 2, **characterized in that** at the hold-down point (26) separating the fixing point on the axis line (16) from the connecting element fixing point (23), the limiting element (15) is designed to press the connecting element (8) to the lining (19).

4. The animal harness according to any of claims 1-3, **characterized in that** the limiting element (15) is traversable perpendicularly to the axis line (4) at least between the connecting element fixing point (23) and the fixing point on the axis line (16).

5. The animal harness according to any of claims 1-4, **characterized in that** the limiting element (15) rests flat on the connecting portion (7), and beyond the connecting element (8) on the neck lining (25) both in the out of use state and in operation.

6. The animal harness according to any of claims 2-5, **characterized in that** the hold-down point (26) moves together with the connecting element (8) along the axis line (4).

7. The animal harness according to any of claims 1-6, **characterized in that** the distance between the connecting portion (7) and the connecting element fixing point (23) in the rest/out of use state is minimum 10 mm.

8. The animal harness according to any of claims 1-7, **characterized in that** the elastic shoulder strap system (1) is covered at least partially by a cover portion (10) on the side opposite to the lining (19), pressing the limiting element (15) to the lining (19).

9. The animal harness according to any of claims 1-8, **characterized in that** each shoulder strap (9) is threaded through a turning limiter (21) formed in the cover portion (10) on the area of the back part (5) lined by the neck lining (25).

10. The animal harness according to any of claims 8-9, **characterized in that** the cover portion (10) is fixed to the lining (19) by fixing zones (12) at least on the two sides of the connecting portion (7).

11. The animal harness according to any of claims 9-10, **characterized in that** the turning limiters (21) are designed to limit the turning of the shoulder straps (9) to within an alpha angle range.

12. The animal harness according to any of claims 1-11, **characterized in that** the connecting portion (7) is at least as long as the largest outer diameter of the connecting element (8).

13. The animal harness according to any of claims 1-12, **characterized in that** the connecting element (8) has end play (28) in the direction perpendicular to the axis line (4), defined by the difference between the inner diameter of the connecting element (8) and the width of the limiting element (15).

14. The animal harness according to claim 13, **characterized in that** the shoulder straps (9) and the connecting element (8) move in the direction perpendicular to the axis line (4) on both sides thereof to the extent of the end play (28), while the limiting element (15) remains along its whole length in the direction of the axis line (4).

15. The animal harness according to any of claims 13-14, **characterized in that** the end play (28) allows a displacement of at least 5 mm to the connecting element (8) in the direction of the vertical axis line (22) on both sides of the axis line (4).

16. The animal harness according to any of claims 13-15, **characterized in that** in the event of a displacement exceeding the end play (28) due to forces acting in a direction other than that of the axis line (4), the limiting element (15) gets wrinkled at the hold-down point (26).

17. The animal harness according to any of claims 10-16, **characterized in that** the limiting element (15), extending beyond the connecting element fixing point (23), ends in the fixing zone (12) of an edging element (11) on the side opposite to the fixing point on the axis line (16).

18. The animal harness according to any of claims 10-17, **characterized in that** there are fixing zones (12) at a distance of at least 20 mm from the axis line (4) on the two sides of the connecting portion (7) on both sides of the axis line (4).

19. The animal harness according to any of claims 10-18, **characterized in that** the fixing zones (12) are at a distance of at most 200 mm from the axis line (4) on the two sides of the connecting portion (7) on both sides of the axis line (4).

20. The animal harness according to any of claims 17-19, **characterized in that** the fixing zones (12) fix together the edging element (11) and the lining (19) at least partially.

21. The animal harness according to any of claims 1-20, **characterized in that** the minimum width of the lining (19) in the direction perpendicular to the axis line (4), in the line of the connecting portion (7), is at least three times the width of the connecting portion (7) in the direction perpendicular to the axis line (4).

22. The animal harness according to any of claims 1-21, **characterized in that** the minimum width of the lining (19) in the direction perpendicular to the axis line (4), in the line of the connecting portion (7), is at least two times the width of the limiting element (15) in the direction perpendicular to the axis line (4).

23. The animal harness according to any of claims 1-22, **characterized in that** the length of the neck lining (25) in the direction of the axis line (4) is at least 10 % of the length of the lining (19) in the direction of the axis line (4).

24. The animal harness according to claim 1, **characterized in that** the turning of the shoulders straps (9) is limited to within an alpha angle range on both sides of the axis line (4) by turning limiters (21) made of straps.

25. The animal harness according to claim 1, where the connecting element (8) is curved metal or plastic ring.

## Patentansprüche

1. Tiergeschirr umfassend ein elastisches Schulterriemensystem zum Ziehen, Führen und Longieren von Tieren, wobei das elastische Schulterriemensystem (1) am Rückenteil (5) des Tiergeschirrs (20), an dessen zumindest teilweise mit einem Halsfutter (25) ausgekleideten Futter (19), befestigt ist und zwei Schulterriemen (9) aufweist, wobei die Schulterriemen (9) in einem Verbindungselement (8), das sich auf der Achslinie (4) des Rückenteils (5) befindet, in einer "V"-Form verbunden sind und miteinander einen Beta-Winkel bilden, wobei jeder für sich einen Alpha-Winkel mit der Achslinie (4) bildet, wobei das Verbindungselement (8) ein gebogener Ring ist und mindestens ein Verbindungsabschnitt (7) um das Verbindungselement (8) geschlungen ist, auf der den Schulterriemen (9) gegenüberliegenden Seite desselben, der zusammen mit dem Futter (19) in mindestens einem Fixierpunkt auf der Achslinie (16) fixiert ist, wobei ferner die dem Verbindungselement (8) gegenüberliegenden Enden der Schulterriemen (9) des elastischen Schulterriemensystems (1) zu einem mit dem elastischen Schulterriemensystem (1) verbundenen Brustpolster (13) verlaufen, ferner das Tiergeschirr (20) einen Bauchgurt (17) mit mindestens einem unter dem Bauch des Hundes verlaufenden und sich in Richtung des Rückenteils (5) erstreckenden Schnallenabschnitt (3) und mindestens einen Leinenverbinder (2) am Rückenteil (5) aufweist,
wobei
dass die auf dem Nackenfutter (25) gleitenden Schulterriemen (9) auf dem Verbindungselement (8) auf einer durch dessen Kurvenverlauf bestimmten Kurve gemeinsam, gleichzeitig und unabhängig voneinander, separat auf mindestens 40% eines Alpha-Winkelbereichs drehen,
ferner der Verbindungsabschnitt (7) elastisch ausgebildet ist und der Verbindungsabschnitt (7) das Verbindungselement (8) mit dem Innenfutter (19) des Rückengurtes (5) elastisch verbindet, wobei das Verbindungselement (8) und die Schulterriemen (9) sowohl in Richtung der Achslinie (4) als auch der senkrecht zur Achslinie (4) verlaufenden Achslinie (22) im Ausmaß der Dehnung des Verbindungsabschnitts (7) bewegbar sind und die Schulterriemen (9) gleichzeitig zu einer elastischen Verschiebung in unterschiedlichem Ausmaß innerhalb eines Alpha-Winkelbereichs fähig sind, abhängig von dem Ausmaß und der Richtung der Dehnung des Verbindungsabschnitts (7) in Abhängigkeit von der Richtung und dem Ausmaß der durch den Leinenverbinder (2) wirkenden Zug- oder Schleppkräfte und der durch die Bewegung der Schultern des Tieres erzeugten Kräfte, der Verbindungsabschnitt (7) auf der dem Futter (19) gegenüberliegenden Seite zumindest teilweise von einem das Verbindungselement (8) durchsetzenden Begrenzungselement (15) überdeckt ist und der Verbindungsabschnitt (7) zusammen mit dem breiteren Begrenzungselement (15) im Fixierpunkt auf der Achslinie (16) fixiert ist, wobei ferner die maximale Dehnung des Verbindungsabschnitts (7) durch die Länge des Begrenzungselements (15) reguliert wird, wobei die maximale Dehnung des Verbindungsteils (7) in Richtung der Achslinie (4) durch einen Verbindungselement-Fixierpunkt (23) begrenzt ist und bei maximaler Lasteinwirkung das Verbindungsteil (7) daran stößt, ferner der Verbindungselement-Fixierpunkt (23) auf der dem Fixierungspunkt auf der Achslinie (16) gegenüberliegenden, gegenüber der Achslinie (4) definierten Seite des Begrenzungselements (15) in Richtung senkrecht zur Achslinie (4) quer über das Begrenzungselement (15) genäht oder genietet und damit am Futter (19) fixiert ist.

2. Tiergeschirr nach Anspruch 1, **dadurch gekennzeichnet, dass** zwischen dem Fixierpunkt auf der Achslinie (16) und dem Verbindungselement-Fixierpunkt (23) ein Niederhaltepunkt (26) vorhanden ist.

3. Tiergeschirr nach Anspruch 2, **dadurch gekennzeichnet, dass** das Begrenzungselement (15) an dem Niederhaltepunkt (26), der den Fixierpunkt auf der Achslinie (16) von dem Verbindungselement-Fixierpunkt (23) trennt, zum Andrücken des Verbindungselements (8) an das Futter (19) ausgestaltet ist.

4. Tiergeschirr nach einem der Ansprüche 1 bis 3, **dadurch gekennzeichnet, dass** das Begrenzungselement (15) zumindest zwischen dem Verbindungselement-Fixierpunkt (23) und dem Fixierungspunkt auf der Achslinie (16) senkrecht zur Achslinie (4) verschiebbar ist.

5. Tiergeschirr nach einem der Ansprüche 1-4, **dadurch gekennzeichnet, dass** das Begrenzungselement (15) sowohl im Außergebrauchszustand als auch bei Nutzung flach auf dem Verbindungsabschnitt (7) und über das Verbindungselement (8) hinaus auf dem Halsfutter (25) aufliegt.

6. Tiergeschirr nach einem der Ansprüche 2-5, **dadurch gekennzeichnet, dass** sich der Niederhaltepunkt (26) zusammen mit dem Verbindungselement (8) entlang der Achslinie (4) bewegt.

7. Tiergeschirr nach einem der Ansprüche 1-6, **dadurch gekennzeichnet, dass** der Abstand zwischen dem Verbindungsabschnitt (7) und dem Befestigungspunkt (23) des Verbindungselements im Ruhezustand/außer Nutzung mindestens 10 mm beträgt.

8. Tiergeschirr nach einem der Ansprüche 1-7, **dadurch gekennzeichnet, dass** das elastische Schulterriemensystem (1) auf der dem Futter (19) gegenüberliegenden Seite zumindest teilweise durch einen Abdeckabschnitt (10) abgedeckt ist, der das Begrenzungselement (15) an das Futter (19) drückt.

9. Tiergeschirr nach einem der Ansprüche 1-8, **dadurch gekennzeichnet, dass** jeder Schultergurt (9) durch einen Drehbegrenzer (21) gefädelt ist, der im Abdeckteil (10) im Bereich des durch das Nackenfutter (25) ausgekleideten Rückenteils (5) ausgebildet ist.

10. Tiergeschirr nach einem der Ansprüche 8-9, **dadurch gekennzeichnet, dass** der Überzugsteil (10) zumindest an den beiden Seiten des Verbindungsteils (7) durch Fixierzonen (12) am Futter (19) befestigt ist.

11. Tiergeschirr nach einem der Ansprüche 9-10, **dadurch gekennzeichnet, dass** die Drehbegrenzer (21) dazu ausgebildet sind, die Drehung der Schulterriemen (9) auf einen Alpha-Winkelbereich zu begrenzen.

12. Tiergeschirr nach einem der Ansprüche 1-11, **dadurch gekennzeichnet, dass** der Verbindungsabschnitt (7) mindestens so lang ist wie der größte Außendurchmesser des Verbindungselements (8).

13. Tiergeschirr nach einem der Ansprüche 1-12, **dadurch gekennzeichnet, dass** das Verbindungselement (8) in der Richtung senkrecht zur Achslinie (4) ein Endspiel (28) aufweist, das durch die Differenz zwischen dem Innendurchmesser des Verbindungselementes (8) und der Breite des Begrenzungselementes (15) definiert ist.

14. Tiergeschirr nach Anspruch 13, **dadurch gekennzeichnet, dass** sich die Schulterriemen (9) und das Verbindungselement (8) beidseitig in Richtung senkrecht zur Achslinie (4) im Ausmaß des Endspiels (28) bewegen, während das Begrenzungselement (15) auf seiner gesamten Länge in Richtung der Achslinie (4) bleibt.

15. Tiergeschirr nach einem der Ansprüche 13-14, **dadurch gekennzeichnet, dass** das Endspiel (28) in Richtung der senkrecht verlaufenden Achslinie (22) auf beiden Seiten der Achslinie (4) eine Verschiebung von mindestens 5 mm zum Verbindungselement (8) zulässt.

16. Tiergeschirr nach einem der Ansprüche 13-15, **dadurch gekennzeichnet, dass** bei einer das Endspiel (28) übersteigenden Verschiebung aufgrund von Kräften, die in einer anderen Richtung als der der Achslinie (4) wirken, das Begrenzungselement (15) am Niederhaltepunkt (26) Falten bildet.

17. Tiergeschirr nach einem der Ansprüche 10-16, **dadurch gekennzeichnet, dass** das Begrenzungselement (15), das sich über den Verbindungselement-Befestigungspunkt (23) hinaus erstreckt, auf der dem Fixierpunkt auf der Achslinie (16) gegenüberliegenden Seite in der Befestigungszone (12) eines Einfassungselementes (11) endet.

18. Tiergeschirr nach einem der Ansprüche 10-17, **dadurch gekennzeichnet, dass** auf beiden Seiten des Verbindungsabschnitts (7) beidseitig der Achslinie (4) Befestigungszonen (12) in einem Abstand von mindestens 20 mm zur Achslinie (4) vorhanden sind.

19. Tiergeschirr nach einem der Ansprüche 10-18, **dadurch gekennzeichnet, dass** die Befestigungszonen (12) auf beiden Seiten des Verbindungsabschnitts (7) einen Abstand von höchstens 200 mm zur Achslinie (4) aufweisen.

20. Tiergeschirr nach einem der Ansprüche 17-19, **dadurch gekennzeichnet, dass** die Befestigungszonen (12) das Einfassungselement (11) und das Futter (19) zumindest teilweise zusammengefügt sind.

21. Tiergeschirr nach einem der Ansprüche 1-20, **dadurch gekennzeichnet, dass** die Mindestbreite des Futters (19) in der Richtung senkrecht zur Achslinie (4), in der Linie des Verbindungsabschnitts (7), mindestens das Dreifache der Breite des Verbindungsabschnitts (7) in der Richtung senkrecht zur Achslinie (4) beträgt.

22. Tiergeschirr nach einem der Ansprüche 1-21, **dadurch gekennzeichnet, dass** die Mindestbreite des Futters (19) in der Richtung senkrecht zur Achslinie (4), in der Linie des Verbindungsabschnitts (7), mindestens das Zweifache der Breite des Begrenzungselements (15) in der Richtung senkrecht zur Achslinie (4) beträgt.

23. Tiergeschirr nach einem der Ansprüche 1-22, **dadurch gekennzeichnet, dass** die Länge des Halsfutters (25) in Richtung der Achslinie (4) mindestens 10 % der Länge des Futters (19) in Richtung der Achslinie (4) beträgt.

24. Tiergeschirr nach Anspruch 1, **dadurch gekennzeichnet, dass** die Verdrehung der Schulterriemen (9) beidseitig der Achslinie (4) durch Drehbegrenzer (21) aus Riemen auf einen Alpha-Winkelbereich begrenzt ist.

25. Tiergeschirr nach Anspruch 1, wobei das Verbindungselement (8) ein gebogener Metall- oder Kunststoffring ist.

## Revendications

1. Harnais pour animal comprenant un système de sangle d'épaule élastique servant à tirer, marcher, fendre des animaux, ce système de sangle d'épaule élastique (1) étant fixé à la partie arrière (5) du harnais (20), à la doublure (19) de celui-ci doublé au moins partiellement par une doublure du cou (25), et comprenant deux bretelles (9) lesquelles (9) sont reliées en forme "V" dans un élément de connexion (8) situé sur la ligne de l'axe (4) de la partie arrière (5), formant un angle bêta les uns avec les autres, et chacun d'entre elles formant séparément un angle alpha avec la ligne de l'axe (4), où l'élément de connexion (8) est un anneau incurvé et il y a au moins une partie (7) reliant en boucle autour de l'élément de connexion (8), sur le côté opposé aux bretelles (9), qui est fixée avec la doublure (19) dans au moins un point de fixation sur la ligne de l'axe (16), et en addition, les extrémités des bretelles (9) du système élastique de sangle d'épaule (1) opposées à l'élément de raccordement (8) s'étendent à un bloc thoracique (13) relié au système élastique de sangle d'épaule (1), le harnais animal (20) a une sangle ventrale (17) ayant au moins une partie de boucle (3), courant sous le ventre du chien et s'étendant dans la direction de la partie arrière (5), et au moins un connecteur de laisse (2) sur la côte arrière (5),
**dans lequel**
les bretelles (9), glissant sur la doublure du cou (25), se tournent sur l'élément de connexion (8), sur une courbe déterminée par la trajectoire de courbe de celui-ci, ensemble, simultanément et indépendamment les uns des autres, séparément, à au moins 40% d'un angle alpha, et en plus, la partie de raccordement (7) a une conception élastique, et la partie de raccordement (7) relie élastiquement l'élément de raccordement (8) à la doublure (19) de la sangle arrière (5), par laquelle l'élément de raccordement (8) et les bretelles (9) sont mobiles dans le sens de la ligne d'axe (4) et de l'axe vertical ligne (22) perpendiculaire à la ligne d'axe (4) dans la mesure de l'étirement de la partie de raccordement (7), et les bretelles (9) sont capables de se déplacer élastiquement dans différentes étendues dans une plage d'angle alpha simultanément, selon l'étendue et la direction de l'étirement de la partie de raccordement (7) en fonction de la direction et de l'étendue des forces de traction ou des forces agissant à travers le connecteur de laisse (2), et les forces générées par le mouvement des épaules de l'animal, la partie de raccordement (7) est au moins partiellement couverte sur le côté opposé à la doublure (19) par un élément limitatif (15) passant par l'élément de raccordement (8) et la partie de raccordement (7) est fixée avec l'élément limitatif plus large (15) dans le point de fixation sur la ligne d'axe (16), le l'étirement maximal de la partie de raccordement (7) est contrôlé par la longueur de l'élément limitatif (15), où l'étirement maximal de la partie de raccordement (7) dans le sens de la ligne d'axe (4) est limité par un point de fixation des éléments de raccordement (23) qui, sous charge maximale agissant la partie de raccordement (7), la tient, en outre, le point de fixation des éléments de connexion (23) sur le côté de l'élément limitatif (15) opposé au point de fixation de la ligne d'axe (16), défini par rapport à la ligne d'axe (4), est cousu à travers l'élément limitatif (15) dans la direction perpendiculaire à la ligne de l'axe (4) ou riveté, le fixant à la doublure (19).

2. Harnais pour animal selon la revendication 1, **caractérisé en ce qu'** il y a un point de fixation (26) entre le point de fixation sur la ligne d'axe (16) et le point de fixation de l'élément de raccordement (23).

3. Harnais pour animal selon la revendication 2, **caractérisé en ce qu'**au point de fixation (26) séparant le point de fixation sur la ligne d'axe (16) du point de fixation de l'élément de raccordement (23), l'élément limitant (15) est conçu pour appuyer l'élément de raccordement (8) à la doublure (19).

4. Harnais pour animal selon toutes les revendications 1 à 3, **caractérisé en ce que** l'élément limitant (15) est perpendiculaire à la ligne d'axe (4) au moins entre le point de fixation de l'élément de raccordement (23) et le point de fixation sur la ligne d'axe (16).

5. Harnais pour animal selon toutes les revendications 1 à 4, **caractérisé en ce que** l'élément limitant (15) repose à plat sur la partie de raccordement (7) et au-delà de l'élément se connectant (8) sur la doublure du cou (25) tant en état hors d'usage qu'en fonctionnement.

6. Harnais pour animal selon toutes les revendications 2 à 5, **caractérisé en ce que** le point de hold-down (26) se déplace avec l'élément de raccordement (8) le long de la ligne d'axe (4).

7. Harnais pour animal selon toutes les revendications 1 à 6, **caractérisé en ce que** la distance entre la partie de raccordement (7) et le point de fixation des éléments de connexion (23) dans l'état de repos / hors utilisation est d'au moins 10 mm.

8. Harnais pour animal selon toutes les revendications 1 à 7, **caractérisé en ce que** le système de sangle d'épaule élastique (1) est couvert au moins partiellement par une partie de couverture (10) sur le côté opposé à la doublure (19), et serre l'élément limitant (15) à la doublure (19).

9. Harnais pour animal selon toutes les revendications 1 à 8, **caractérisé en ce que** chaque sangle d'épaule (9) est filetée par un limiteur tournant (21) formé dans la partie de couverture (10) sur la zone de la partie arrière (5) bordée par la doublure de cou (25).

10. Harnais pour animal selon les revendications 8 et 9, **caractérisé en ce que** la partie de couverture (10) est fixée à la doublure (19) par des zones de fixation (12) au moins sur les deux côtés de la partie de raccordement (7).

11. Harnais pour animal selon les revendications 9 et 10, **caractérisé en ce que** les limiteurs rotaux (21) sont conçus pour limiter le retournement des sangles d'épaule (9) à un angle alpha.

12. Harnais pour animal selon toutes les revendications 1 à 11, **caractérisé en ce que** la partie de raccordement (7) est au moins aussi longue que le plus grand diamètre externe de l'élément de raccordement (8).

13. Harnais pour animal selon toutes les revendications 1 à 12, **caractérisé en ce que** l'élément de raccordement (8) a un jeu (28) dans la direction perpendiculaire à la ligne d'axe (4), défini par la différence entre le diamètre intérieur de l'élément de raccordement (8) et la largeur de l'élément limitant (15).

14. Harnais pour animal selon le revendication 13, **caractérisé en ce que** les bretelles (9) et l'élément de raccordement (8) se déplacent dans la direction perpendiculaire à la ligne d'axe (4) des deux côtés de celui-ci dans la mesure du jeu final (28), tandis que l'élément limitant (15) reste le long de toute sa longueur dans la direction de la ligne d'axe (4).

15. Harnais pour animal selon les revendications 13 et 14, **caractérisé en ce que** le jeu final (28) permet un déplacement d'au moins 5 mm à l'élément de connexion (8) dans le sens de la ligne d'axe vertical (22), et ce aux deux côtés de la ligne d'axe (4).

16. Harnais pour animal selon toutes les revendications 13 à 15, **caractérisé en ce que** en cas de déplacement dépassant le jeu final (28) en raison de forces agissant dans une direction autre que celle de la ligne d'axe (4), l'élément limitatif (15) se froisse au point de hold-down (26).

17. Harnais pour animal selon toutes les revendications 10 à 16, **caractérisé en ce que** l'élément limitatif (15), s'étendant au-delà du point de fixation des éléments de raccordement (23), se termine dans la zone de fixation (12) d'un élément de bordure (11) sur le côté opposé au point de fixation de la ligne d'axe (16).

18. Harnais pour animal selon toutes les revendications 10 à 17, **caractérisé en ce qu'**il existe des zones de fixation (12) à une distance d'au moins 20 mm de la ligne d'axe (4) sur les deux côtés de la partie de raccordement (7) et au deux côtés de la ligne d'axe (4).

19. Harnais pour animal selon toutes les revendications 10 à 18, **caractérisé en ce que** les zones de fixation (12) sont à une distance non supérieure à 200 mm de la ligne d'axe (4) sur les deux côtés de la partie de raccordement (7) et aux deux côtés de la ligne d'axe (4).

20. Harnais pour animal selon toutes les revendications 17 à 19, **caractérisé en ce que** les zones de fixation (12) fixent ensemble et au moins partiellement l'élément de bordure (11) et la doublure (19).

21. Harnais pour animal selon toutes les revendications 1 à 20, **caractérisé en ce que** dans la ligne de la partie de raccordement (7), la largeur minimale de la doublure (19) dans le sens perpendiculaire à la ligne d'axe (4) est au moins trois fois la largeur de la partie de raccordement (7) dans le sens perpendiculaire à la ligne d'axe (4).

22. Harnais pour animal selon toutes les revendications 1 à 21, **caractérisé en ce que**, dans la ligne de la partie de raccordement (7), la largeur minimale de la doublure (19) dans le sens perpendiculaire à la ligne d'axe (4) est au moins deux fois la largeur de l'élément limitatif (15) dans le sens perpendiculaire à la ligne d'axe (4).

23. Harnais pour animal selon toutes les revendications 1 à 22, **caractérisé en ce que** la longueur de la doublure de cou (25) dans le sens de la ligne d'axe (4) est au moins 10 % de la longueur de la doublure (19) dans le sens de la ligne d'axe (4).

24. Harnais pour animal selon la revendication 1, **caractérisé en ce que** le retournement des sangles d'épaules (9) est limité à un angle alpha sur les deux côtés de la ligne d'axe (4) par des limiteurs (21) formés de sangles.

25. Harnais pour animal selon la revendication 1, dans lequel l'élément de raccordement (8) est un anneau en métal ou en plastique.
